# EUROPEAN PATENT SPECIFICATION

(11) **EP 3 353 014 B1**
(45) Date of publication and mention of the grant of the patent: **17.03.2021**
(21) Application number: 16794714.2
(22) Date of filing: 02.11.2016
(51) Int. Cl.: B60R 3/02

(54) **DRIVE ARRANGEMENT**
ANTRIEBSANORDNUNG
AGENCEMENT D'ENTRAÎNEMENT

(30) Priority: 17.11.2015 GB 201520249
(43) Date of publication of application: 01.08.2018
(73) Proprietor: ASG Group Ltd, Derbyshire, Derby DE24 8PX (GB)
(72) Inventor: COX, Anthony Martin, Derby Derbyshire DE24 8PX (GB)
(74) Representative: Swindell & Pearson Limited
(86) International application number: PCT/GB2016/053398
(87) International publication number: WO 2017/085456

(56) References cited:
- EP-A1- 2 418 124
- WO-A1-99/37505
- US-A1- 2006 125 204

## Description

This invention concerns a drive arrangement for a retractable vehicle sidestep, a retractable vehicle sidestep assembly including such an arrangement, and a vehicle incorporating such an assembly.

With taller vehicles such as for instance SUVs, it is often desirable to provide a step to aid a person getting in and out of the vehicle. It is often required that such steps retract beneath the vehicle prior to driving thereof, and particularly that they do not extend laterally outwards beyond the remainder of the vehicle during motion.

Electric motors with appropriate gearboxes are generally used to enable retractable vehicle steps to be selectively moved into a usable position, or to a retracted position. Difficulties can be encountered in locating such motors and gearboxes so that they do not obstruct other components on a vehicle, nor for instance reduce ground clearance.

Such steps are usually mounted to a vehicle by at least two linkage arrangements, with one such arrangement towards each end of the step. Problems can be encountered if the arrangements do not move simultaneously Prior art examples of such designs can be found in US 2006/125204 A1 or WO 99/37505 A1.

According to the present invention there is provided a drive arrangement for selectively moving a vehicle sidestep between an operative position and a retracted position, the drive arrangement comprising an electric motor with a driveshaft, the driveshaft mounting a first worm gear, a transfer shaft being provided which mounts a first spur gear engageable with the first driveshaft to be driven thereby, the transfer shaft also mounting a second worm gear which drivingly engages with a second spur gear, the second spur gear being mounted on an output shaft which drives movement of the vehicle sidestep, the output shaft being parallel to and offset relative to the driveshaft, with the transverse shaft being parallel to a plane which contains both the drive and output shafts.

The output shaft can extend in either or both directions relative to the driveshaft.

The output shaft may extend in opposite directions relative to the electric motor so that the output shaft can drive linkage arrangements towards each end of the sidestep.

The first and second spur gears may have substantially the same geometry.

The first and second worm gears may have substantially the same geometry.

The invention also provides a vehicle retractable sidestep assembly, the assembly including a drive arrangement for each side of the assembly, with the drive assembly being according to any of the preceding five paragraphs.

A drive arrangement may be provided for each linkage assembly provided towards a respective end of the sidestep.

The motors may be mountable in a mirror image alignment on each side of a vehicle.

The invention still further provides a vehicle with a retractable sidestep assembly, the assembly being according to any of the preceding three paragraphs.

An embodiment of the present invention will now be described by way of example only and with reference to the accompanying drawings.
Fig. 1 is a diagrammatic end view of a vehicle sidestep in a stowed position;
Fig. 2 is a similar view to fig. 1 but with the sidestep in a deployed position;
Fig. 3 is a plan view of a drive arrangement for a vehicle sidestep, according to the invention;
Fig. 4 is a cross sectional end view along the line A-A in fig. 3;
Fig. 5 is a diagrammatic side view of the arrangement of fig. 3;
Fig. 6 is a cross sectional view from beneath along the line B-B in fig. 5;
Fig. 7 is a diagrammatic perspective view of the arrangement of fig. 3;
Fig. 8 is a diagrammatic perspective sectional view of the arrangement of fig. 3; and
Fig. 9 is a diagrammatic plan view illustrating a vehicle retractable sidestep assembly according to the invention mounted on a vehicle.

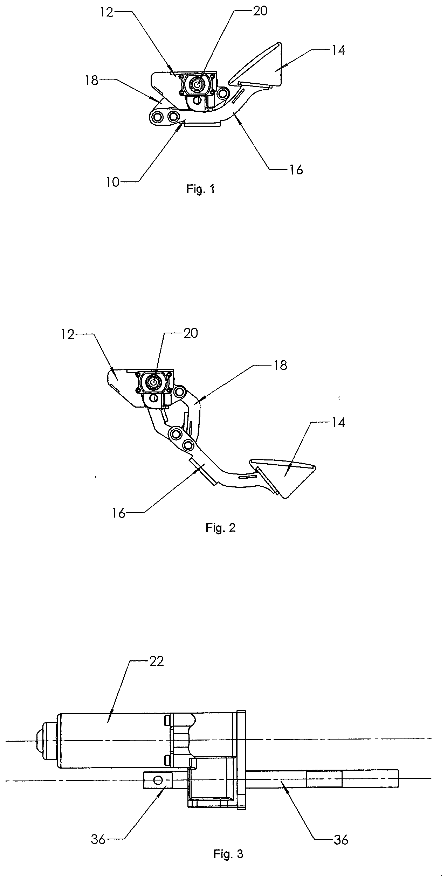

Figs. 1 and 2 show a sidestep arrangement which includes a mounting assembly 10 towards each end of the arrangement. Each assembly 10 includes a bracket 12 for mounting the arrangement to a vehicle. The arrangement includes an elongate sidestep 14 mounted to an assembly 10 towards each end of the side step 14.

Each assembly 10 includes a cranked arm 16 mounted at one end to the side step 14. The other end of the cranked arm 16 is mounted by a double pivotal link 18 to the respective bracket 12.

A drive arrangement 20 is provided for moving the link arrangements 18 and hence sidestep 14 between the stowed and deployed conditions as shown in figs 1 and 2. A drive arrangement 20 may be provided for each link arrangement 18, or a connecting rod or similar may connect between the drive arrangement 20 connected to one link arrangement 18 and the other link arrangement 18 or between the two link arrangements 18.

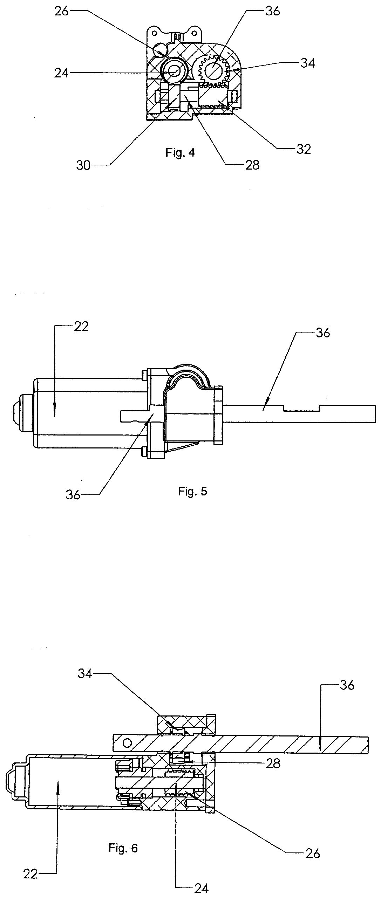

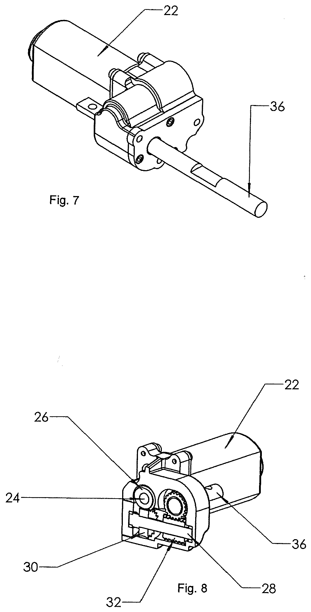

Figs. 3 to 8 show a drive arrangement 20 in more detail. The arrangement 20 includes an electric motor 22 with a driveshaft 24. The driveshaft drives a first worm gear 26.

A transverse link shaft 28 extends below the driveshaft 24 and mounts a first spur gear 30 which engages with the first worm gear 26. The shaft 28 also mounts a second worm gear 32. The second worm gear 32 is engageable with a second spur gear 34 mounted on an output shaft 36.

The first and second worm gears 26, 32 have similar geometry, as do the first and second spur gears 30, 34. In this arrangement the driveshaft 34 and output shaft 36 are parallel and offset relative to each other. The transverse link shaft 28 extends perpendicularly to the driveshaft 24 and output shaft 36, and also extends parallel to a plane which includes both shafts 24, 36.

This arrangement means that the drive arrangement 20 can be used in a mirror alignment on either side of a vehicle and will essentially take up the equivalent space and therefore not affect ground clearance and/or interfere with particular components.

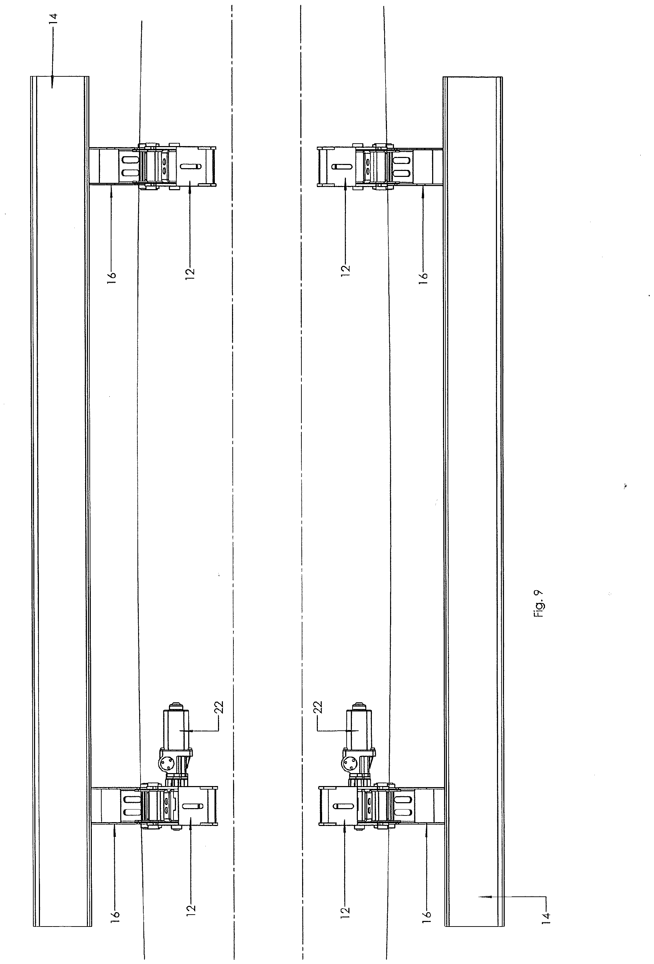

In contrast in previous arrangements if the drive arrangements were switched over, they would generally fill different spaces on either side of the vehicle and potentially interfere with the location of components of the vehicle and/or extend downwardly or upwardly which would generally be undesirable, and may affect ground clearance. The provision of the drive arrangements 20 in mirror alignment is shown diagrammatically in fig. 9.

As can be seen in the drawings the output shaft 36 can extend from either side of the drive arrangement 20, thereby permitting the drive arrangement 20 to be provided either side of the mounting brackets 12 as may be most appropriate for particular vehicles. This also permits if required a single drive arrangement to operate a pair of link arrangements 18 with the output shaft 36 or other connection arrangements extending therebetween.

The use of a double drop gearbox with two worm gears provides for a significant drop in speed which in this instance is 400:1, to be achieved in a relatively small space. Worm gears also have a self locking feature which does not allow the output shaft to back drive the motor, and thus locks the sidestep in a required position.

There is thus described a drive arrangement for a retractable sidestep assembly, and also a sidestep assembly in a vehicle with such an assembly which provides a number of advantages. A very compact arrangement is provided which occupies the equivalent position on each side of a vehicle. The auto lock arrangement as outlined above is also provided for, by the use of worm gears.

Various modifications may be made without departing from the scope of the invention. For example, as indicated a separate drive arrangement may be provided for each bracket, or the brackets may be interconnected. In some instances the output shaft can just extend from one side of the drive arrangement.

## Claims

1. A drive arrangement (20) for selectively moving a vehicle sidestep (14) between an operative position and a retracted position, the drive arrangement comprising an electric motor (22) with a driveshaft (24), the driveshaft mounting a first worm gear (26), a transfer shaft being provided which mounts a first spur gear (30) engageable with the first driveshaft to be driven thereby, the transfer shaft also mounting a second worm gear (32) which drivingly engages with a second spur gear (34), the second spur gear being mounted on an output shaft (36) which drives movement of the vehicle sidestep, the output shaft being parallel to and offset relative to the driveshaft, with the transfer shaft being parallel to a plane which contains both the drive and output shafts.

2. A drive arrangement according to claim 1, in which the output shaft (36) extends in either or both directions relative to the driveshaft.

3. A drive arrangement according to claim 2, in which the output shaft extends in opposite directions relative to the electric motor (22) so that the output shaft can drive linkage arrangements towards each end of the sidestep.

4. A drive arrangement according to any of the preceding claims, in which the first and second spur gears (30, 34) have substantially the same geometry.

5. A drive arrangement according to any of the preceding claims, in which the first and second worm gears (26, 32) have substantially the same geometry.

6. A vehicle retractable sidestep assembly, the assembly including a drive arrangement (20) for each side of the assembly, with the drive assembly being according to any of the preceding claims.

7. An assembly according to claim 6, in which a drive arrangement (20) is provided for each linkage assembly provided towards a respective end of the sidestep.

8. An assembly according to claims 6 or 7, in which the motors (22) are mountable in a mirror image alignment on each side of a vehicle.

9. A vehicle with a retractable sidestep assembly, the assembly being according to any of claims 6 to 8.

## Patentansprüche

1. Antriebsanordnung (20) zum wahlweisen Bewegen einer Fahrzeug-Seitenstufe (14) zwischen einer Betriebsposition und einer eingefahrenen Position, wobei die Antriebsanordnung einen Elektromotor (22) mit einer Antriebswelle umfasst, wobei die Antriebswelle (24) eine erste Schnecke (26) trägt, wobei eine Übertragungswelle vorgesehen ist, die ein erstes Schneckenrad (30) trägt, das mit der ersten Antriebswelle in Eingriff bringbar ist, um dadurch angetrieben zu werden, wobei die Übertragungswelle ferner eine zweite Schnecke (32) trägt, das mit einem zweiten Schneckenrad (34) in antreibendem Eingriff steht, wobei das zweite Schneckenrad an einer Abtriebswelle (36) montiert ist, die die Bewegung der Fahrzeug-Seitenstufe antreibt, wobei die Abtriebswelle parallel zu der Antriebswelle und relativ zu dieser versetzt ist, wobei die Übertragungswelle parallel zu einer Ebene ist, die sowohl die Antriebs- als auch die Abtriebswelle enthält.

2. Antriebsanordnung nach Anspruch 1, bei der sich die Abtriebswelle (36) in einer oder beiden Richtungen relativ zu der Antriebswelle erstreckt.

3. Antriebsanordnung nach Anspruch 2, bei der sich die Abtriebswelle bezüglich des Elektromotors (22) in entgegengesetzte Richtungen erstreckt, so dass die Abtriebswelle Kopplungsanordnungen zu jedem Ende der Seitenstufe hin antreiben kann.

4. Antriebsanordnung nach einem der vorhergehenden Ansprüche, bei der das erste und das zweite Schneckenrad (30, 34) im Wesentlichen die gleiche Geometrie aufweisen.

5. Antriebsanordnung nach einem der vorhergehenden Ansprüche, bei der die erste und die zweite Schnecke (26, 32) im Wesentlichen die gleiche Geometrie aufweisen.

6. Fahrzeug-Einfahrbare-Seitenstufen-Baugruppe, wobei die Baugruppe eine Antriebsanordnung (20) für jede Seite der Baugruppe umfasst, wobei die Antriebsanordnung einem der vorhergehenden Ansprüche entspricht.

7. Baugruppe nach Anspruch 6, bei der eine Antriebsanordnung (20) für jede Kopplungsanordnung vorgesehen ist, die zu einem jeweiligen Ende der Seitenstufe hin vorgesehen ist.

8. Baugruppe nach Anspruch 6 oder 7, bei der die Motoren (22) auf jeder Seite eines Fahrzeugs spiegelbildlich montierbar sind.

9. Fahrzeug mit einer einfahrbaren Seitenstufen-Baugruppe, wobei die Baugruppe einem der Ansprüche 6 bis 8 entspricht.

## Revendications

1. Agencement d'entraînement (20) pour déplacer sélectivement un marchepied latéral de véhicule (14) entre une position fonctionnelle et une position rétractée, l'agencement d'entraînement comprenant un moteur électrique (22) avec un arbre d'entraînement, l'arbre d'entraînement (24) montant une première vis sans fin (26), un arbre de transfert étant prévu qui monte une première roue droite cylindrique (30) capable de venir en prise avec le premier arbre d'entraînement pour être entraînée par celui-ci, l'arbre de transfert montant également une seconde vis sans fin (32) qui vient en prise par entraînement avec une seconde roue droite cylindrique (34), la seconde roue droite cylindrique étant montée sur un arbre de sortie (36) qui entraîne un déplacement du marchepied latéral de véhicule, l'arbre de sortie étant parallèle à l'arbre d'entraînement et décalé par rapport à celui-ci, l'arbre de transfert étant parallèle à un plan qui contient à la fois l'arbre d'entraînement et l'arbre de sortie.

2. Agencement d'entraînement selon la revendication 1, dans lequel l'arbre de sortie (36) s'étend soit dans l'une des directions, soit dans les deux directions par rapport à l'arbre d'entraînement.

3. Agencement d'entraînement selon la revendication 2, dans lequel l'arbre de sortie s'étend dans des directions opposées par rapport au moteur électrique (22) de telle sorte que l'arbre de sortie peut entraîner des agencements de biellettes vers chaque extrémité du marchepied latéral.

4. Agencement d'entraînement selon l'une quelconque des revendications précédentes, dans lequel les première et seconde roues droites cylindriques (30, 34) ont sensiblement la même géométrie.

5. Agencement d'entraînement selon l'une quelconque des revendications précédentes, dans lequel les première et seconde vis sans fin (26, 32) ont sensiblement la même géométrie.

6. Ensemble marchepied latéral rétractable de véhicule, l'ensemble comportant un agencement d'entraînement (20) pour chaque côté de l'ensemble, l'ensemble d'entraînement étant selon l'une quelconque des revendications précédentes.

7. Ensemble selon la revendication 6, dans lequel un agencement d'entraînement (20) est prévu pour chaque ensemble biellette prévu vers une extrémité respective du marchepied latéral.

8. Ensemble selon les revendications 6 ou 7, dans lequel les moteurs (22) peuvent être montés en alignement symétrique sur chaque côté d'un véhicule.

9. Véhicule avec un ensemble marchepied rétractable, l'ensemble étant selon l'une quelconque des revendications 6 à 8.
